# EUROPEAN PATENT APPLICATION

(11) **EP 2 461 566 A1**
(43) Date of publication of application: **06.06.2012**
(21) Application number: 10804491.8
(22) Date of filing: 29.07.2010
(51) Int. Cl.: H04N 5/20, G06T 5/00, H04N 1/407

(54) **GRADATION ADJUSTMENT DEVICE, IMAGE DISPLAYING DEVICE, TELEVISION RECEIVER, PROGRAM, AND COMPUTER-READABLE STORAGE MEDIUM HAVING PROGRAM RECORDED THEREIN**

(30) Priority: 31.07.2009 JP 2009180079
(71) Applicant: Sharp Kabushiki Kaisha, Osaka-shi, Osaka 545-8522 (JP)
(72) Inventor: WATANABE, Mihoko, Osaka-shi, Osaka 545-8522 (JP); KOIKE, Akira, Osaka-shi, Osaka 545-8522 (JP); TAKIGUCHI, Masahuki, Osaka-shi, Osaka 545-8522 (JP)
(74) Representative: Müller - Hoffmann & Partner
(86) International application number: PCT/JP2010/062783
(87) International publication number: WO 2011/013745

(57) **Abstract**

A video processing section (19) of the present invention is a gradation adjustment device for correcting a gradation of an image to be displayed on a television receiver (10). The video processing section (19) includes, a gradation correcting section (2), an intermediate brightness region determining section (3), a brightness difference determining section (4a), a brightness difference threshold determining section (4b), and a gradation adjusting section (5). The video processing section (19) corrects brightnesses of adjacent pixels, which brightnesses are included in an intermediate brightness region of brightness distribution, so as to reduce a first brightness difference between the adjacent pixels, which first brightness difference is obtained in a case where gain is applied to input image data, [1] the first brightness difference being greater than a second brightness difference between the adjacent pixels, which second brightness difference is obtained in a case where gain is not applied to the input image data, and [2] the first brightness difference being not more than a predetermined threshold. This makes it possible to provide a gradation adjustment device for realizing an image displaying device that keeps an excellent quality of an original image.

## Description

### Technical Field

The present invention relates to a gradation adjustment device provided in an image displaying device for changing an image quality of an input image and then displaying an image whose image quality has been changed, the image displaying device, a television receiver, a program, and a computer-readable storage medium in which the program is stored.

### Background Art

There has been put into practical use an image displaying device capable of changing types of an image, or an image quality setting suitable to audiovisual environments so as to obtain a preferable image quality. The image displaying device is configured to (i) display an image adjustment menu, (ii) receive setting of image quality parameter values of brightness, black level, contrast, color density, hue, image quality and the like (iii) adjust an image quality of an input image by use of an image quality parameter value thus received, and (iv) display the input image. For example, Patent Literatures 1 through 3 disclose devices having such an adjustment function.

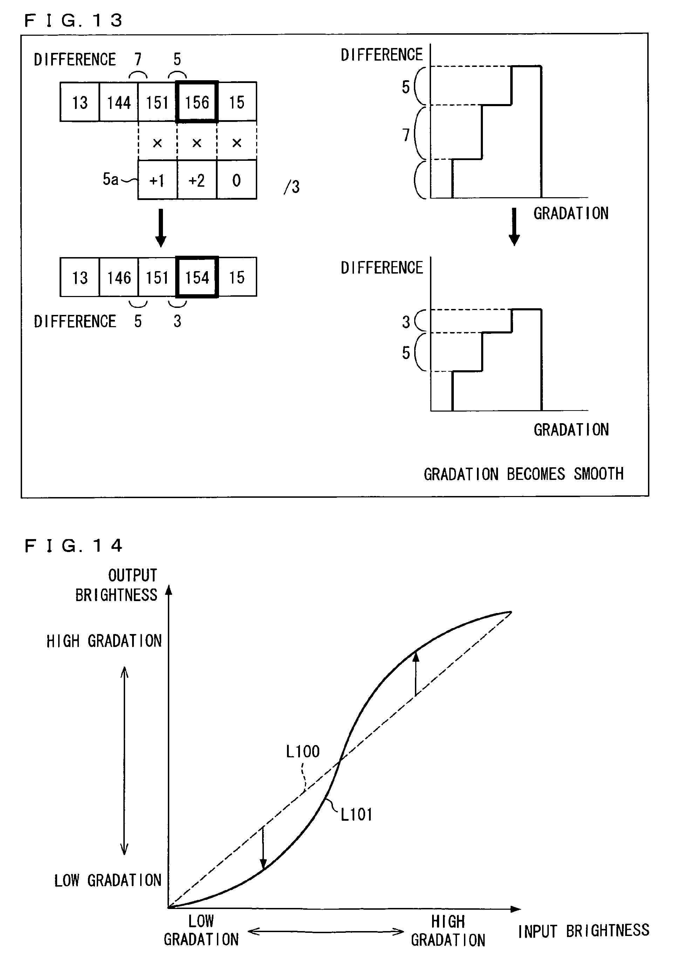

In particular, contrast adjustment that is an adjustment function is generally carried out by correction of a gamma curve indicative of a so-called gamma property. The gamma curve is corrected by use of, for example, brightness distribution of histogram distribution of an input image. Specifically, in a case where brightness is distributed in an intermediate brightness region, a gamma curve is corrected from L100 to L101, as shown in, for example, Fig. 14. In this case, the following adjustment (a so-called drawing) is generally carried out. A high gradation part of the gamma curve is lifted up, while a low gradation part of the gamma curve is lifted down. Note that correction quantity (which is indicated by an arrow of Fig. 14) of the gamma curve, which correction quantity is set for each of brightness levels, is called gain.

### Citation List

### Patent Literatures

Patent Literature 1
   Japanese Patent Application Publication, Tokukaihei No. 11-288242 A (Publication Date: October 19, 1999)
Patent Literature 2
   Japanese Patent Application Publication, Tokukai No. 2007-336531 A (Publication Date: December 27, 2007)
Patent Literature 3
   Japanese Patent Application Publication, Tokukai No. 2006-101363 A (Publication Date: April 13, 2006)

### Summary of Invention

### Technical Problem

However, the correction of the gamma curve to L101 of Fig. 14 causes an originally smooth gradation part to be lifted up or down. This generates steps in gradations, thereby possibly causing an image displaying device to display a pseudo contour in an intermediate gradation part such as a skin color.

### Solution to Problem

The present invention was made in view of the problem, and an object of the present invention is to provide a gradation adjustment device for realizing an image displaying device that keeps an excellent quality of an original image, the image displaying device, a television receiver, a program, and a computer-readable storage medium in which the program is stored.

That is, in order to attain the object, a gradation adjustment device of the present invention is a gradation adjustment device, for correcting a gradation of an image to be displayed by an image displaying device, the gradation adjustment device, including a correction mechanism for correcting brightnesses of adjacent two pixels, which brightnesses are included in an intermediate brightness region of brightness distribution, so as to reduce a first brightness difference between the adjacent two pixels, which first brightness difference is obtained in a case where predetermined quantity of gradation correction is carried out with respect to input image data, (1) the first brightness difference being greater than a second brightness difference between the adjacent two pixels, which second brightness difference is obtained in a case where the predetermined quantity of gradation correction is not carried out with respect to the input image data, and (2) the first brightness difference being not more than a predetermined threshold.

According to the configuration, the gradation adjustment device of the present invention can reduce a gradation step generated by lifting up or down of an originally smooth gradation part, which lifting up or down is caused by execution of the predetermined quantity (gain) of gradation correction (correction of a gamma curve having a gamma property). That is, according to the configuration, the gradation adjustment device of the present invention can smooth the gradation step.

This makes it possible to provide an image displaying device that can (i) solve a problem that a pseudo contour appears in an intermediate gradation part such as a skin color and (ii) display an image having an excellent quality of an original image.

Further, in order to attain the object, a gradation adjustment device of the present invention is a gradation adjustment device, for correcting a gradation of an image to be displayed by an image displaying device, the gradation adjustment device, including: a gradation correcting section for carrying out predetermined quantity of gradation correction with respect to input image data; an intermediate brightness region determining section for determining whether or not brightnesses of adjacent two pixels are included in an intermediate brightness region of brightness distribution; a brightness difference determining section for determining whether or not a brightness difference between the adjacent two pixels that are determined, by the intermediate brightness region determining section, to have the brightnesses that are included in the intermediate brightness region becomes greater after the predetermined quantity of gradation correction is carried out than before the predetermined quantity of gradation correction is carried out; a brightness difference threshold determining section for determining whether or not the brightness difference determined, by the brightness difference determining section, to become greater is not more than a predetermined threshold; and a correction section for correcting the brightnesses of the adjacent two pixels whose brightness difference is determined, by the brightness difference threshold determining section, to be not more than the predetermined threshold, the correction section correcting the brightnesses of the adjacent two pixels, so that the brightness difference is reduced.

According to the configuration, the gradation adjustment device of the present invention can reduce a gradation step generated by lifting up or down of an originally smooth gradation part, which lifting up or down is caused by correction of a gamma curve having a gamma property. That is, according to the configuration, the gradation adjustment device of the present invention can smooth the gradation step.

This makes it possible to provide an image displaying device that can (i) solve the problem that a pseudo contour appears in an intermediate gradation part such as a skin color and (ii) display an image having an excellent quality of an original image.

For a fuller understanding of the nature and advantages of the invention, reference should be made to the ensuing detailed description taken in conjunction with the accompanying drawings.

### Advantageous Effects of Invention

A gradation adjustment device of the present invention, including a correction mechanism for correcting brightnesses of adjacent two pixels, which brightnesses are included in an intermediate brightness region of brightness distribution, so as to reduce a first brightness difference between the adjacent two pixels, which first brightness difference is obtained in a case where predetermined quantity of gradation correction is carried out with respect to input image data, (1) the first brightness difference being greater than a second brightness difference between the adjacent two pixels, which second brightness difference is obtained in a case where the predetermined quantity of gradation correction is not carried out with respect to the input image data, and (2) the first brightness difference being not more than a predetermined threshold.

This makes it possible to provide an image displaying device that can (i) solve the problem that a pseudo contour appears in an intermediate gradation part such as a skin color and (ii) display an image having an excellent quality of an original image.

### Brief Description of Drawings

Fig. 1

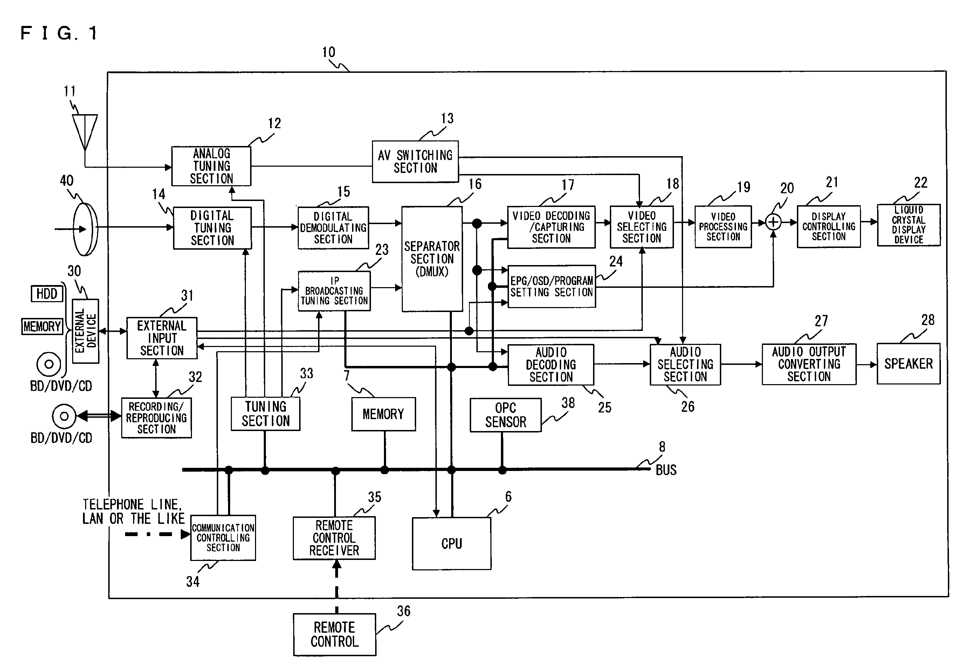

   Fig. 1 is a block diagram illustrating a configuration of a television receiver (an image displaying device) in accordance with an embodiment of the present invention.
Fig. 2

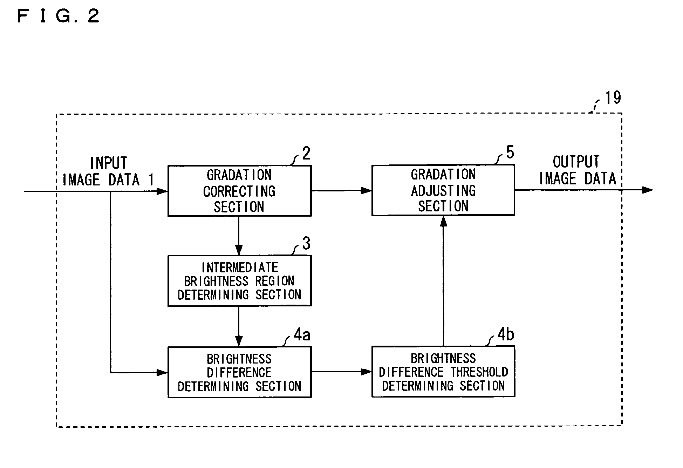

   Fig. 2 is a view illustrating a configuration of a video processing section provided in the television receiver of Fig. 1.
Fig. 3

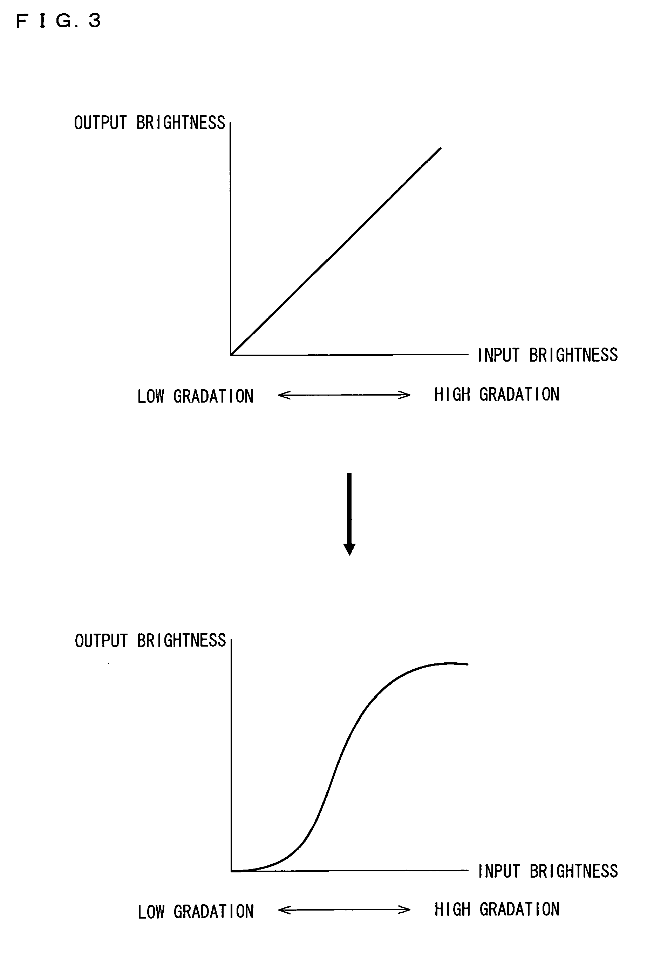

   Fig. 3 is a view illustrating a change in gradation caused by gradation correction carried out in a general image displaying device.
Fig. 4

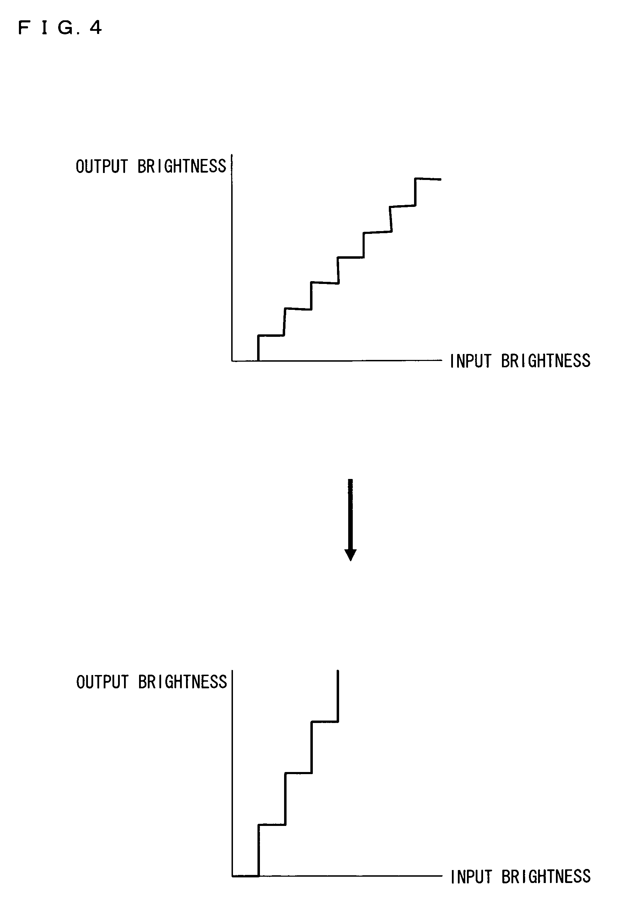

   Fig. 4 is a view illustrating a gradation step of the change in gradation of Fig. 3.
Fig. 5

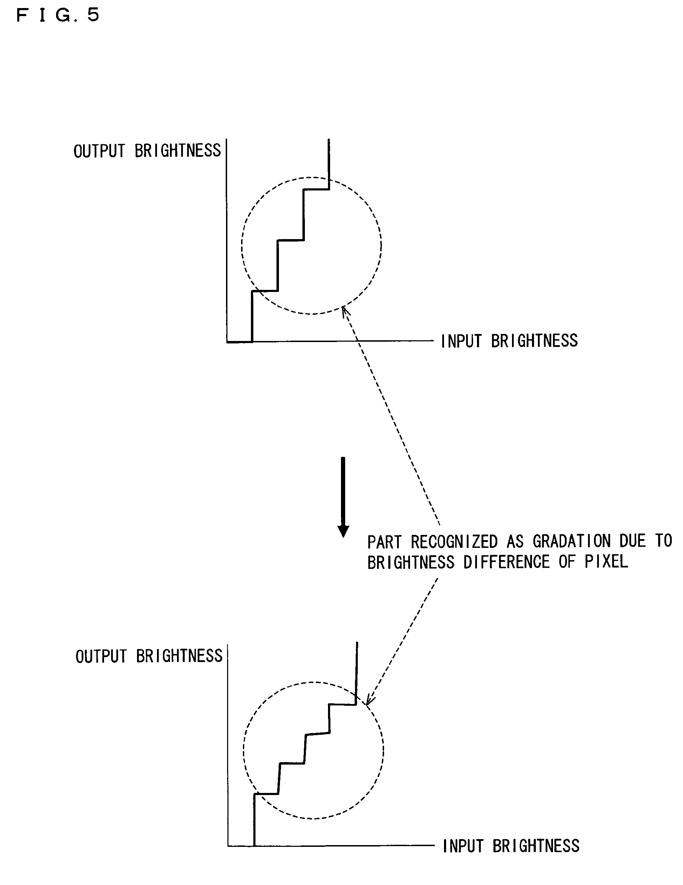

   Fig. 5 is an explanatory view schematically illustrating a gradation adjustment mechanism of the present invention.
Fig. 6

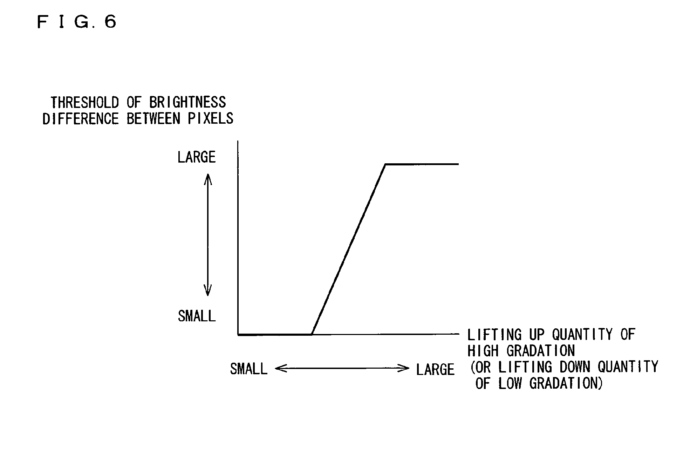

   Fig. 6 is a view illustrating a relationship between (i) a threshold of a brightness difference between pixels and (ii) lifting up quantity of a high gradation part.
Fig. 7

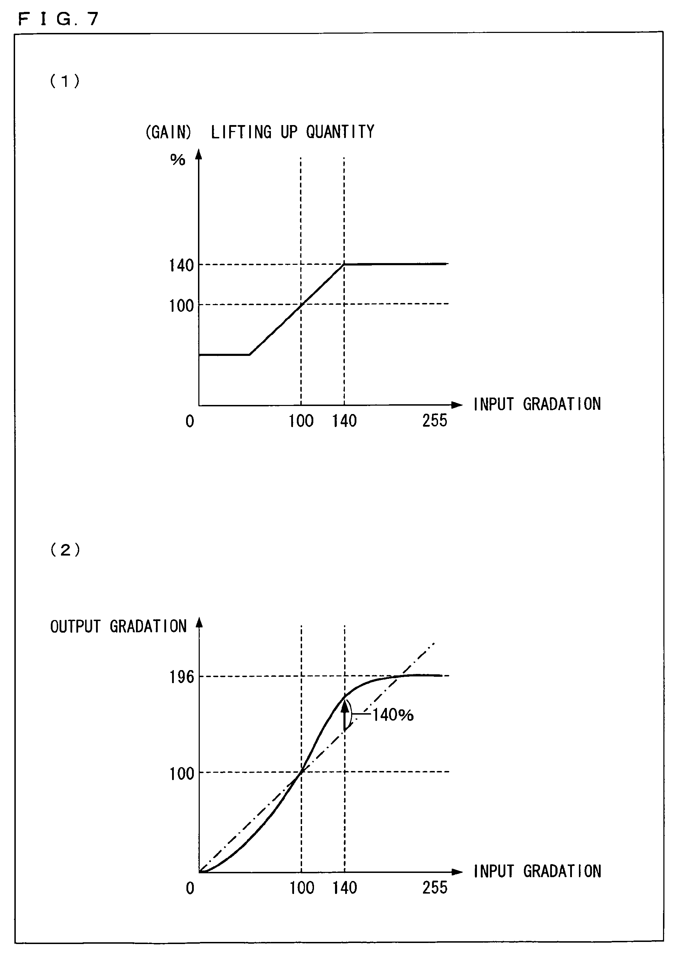

   Fig. 7 is a view illustrating a relationship between lifting up quantity of a high gradation part and an input gradation.
Fig. 8

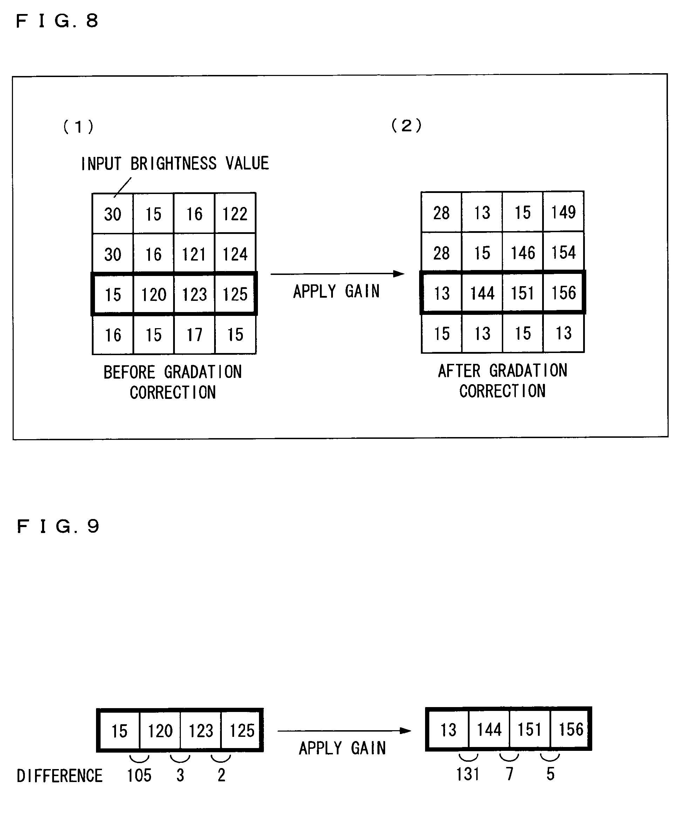

   Fig. 8 is a view illustrating a part of Example in which an effect of a gradation adjustment mechanism of the present invention is explained.
Fig. 9
   Fig. 9 is a view illustrating a part of Example in which an effect of a gradation adjustment mechanism of the present invention is explained.
Fig. 10

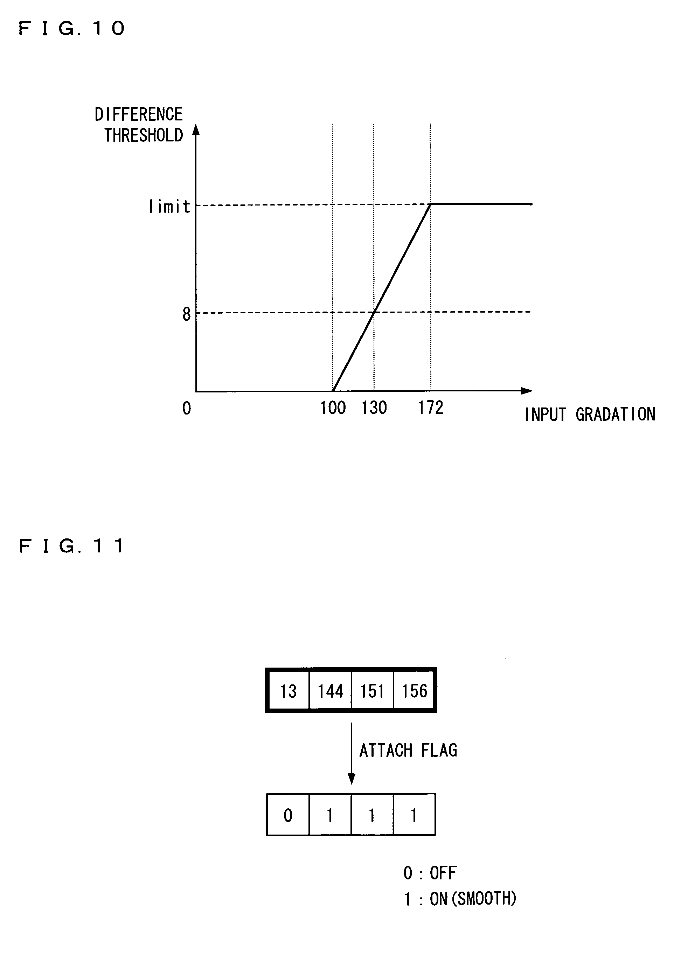

   Fig. 10 is a view illustrating a part of Example in which an effect of a gradation adjustment mechanism of the present invention is explained.
Fig. 11
   Fig. 11 is a view illustrating a part of Example in which an effect of a gradation adjustment mechanism of the present invention is explained.
Fig. 12

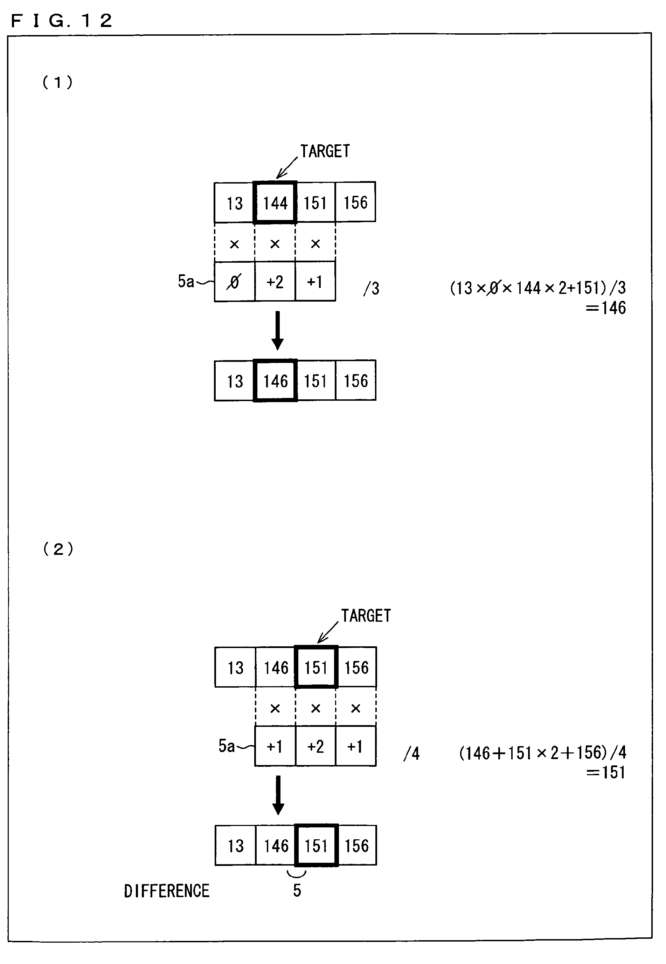

   Fig. 12 is a view illustrating a part of Example in which an effect of a gradation adjustment mechanism of the present invention is explained.
Fig. 13
   Fig. 13 is a view illustrating a part of Example in which an effect of a gradation adjustment mechanism of the present invention is explained.
Fig. 14
   Fig. 14 is a view illustrating a change in gradation caused by gradation correction carried out in a general image displaying device.

### Description of Embodiments

The following description will discuss an embodiment of the present invention, with reference to Figs. 1 through 13. An image displaying device of the present embodiment is applicable to, for example, a television receiver, or an image displaying device of, for example, a mobile phone having a function of displaying an image (video). The present invention is characteristic particularly in a mechanism of changing (correcting) input image data.

Firstly, the whole configuration of a television receiver that is an example of the image displaying device is described. Subsequently, the mechanism of correcting input image data is described in detail.

### [Image Displaying Device]

Fig. 1 is a block diagram illustrating a configuration of an image displaying device in accordance with an embodiment of the present invention. The television receiver (the image displaying device) of the present embodiment can correct such that gradation expression from a low gradation part to a high gradation part becomes smooth, by reducing a gradation step caused by predetermined gain quantity of correction of adjacent two pixels each having a brightness included in an intermediate brightness region of brightness distribution.

In Fig. 1, "10" shows, for example, a whole television receiver including a liquid crystal display device 22 having a screen size of 16:9 (1920×1010 dots). The television receiver 10 includes a bus 8, and a CPU 6 and a memory 7 each connected to the bus 8. An operation of the television receiver 10 is controlled by various control programs stored in the CPU 6 and the memory 7. That is, the television receiver shown in Fig. 1 is controlled by a computer system including the CPU 6. The memory 7 stores a program for causing the television receiver to be controlled by the computer system.

The memory 7 is normally constituted by a RAM. The memory 7 can partially include a ROM. The memory 7 can also include a rewritable flush memory or the like. The memory 7 stores, for example, an OS for operating a CPU, and various control soft. The memory 7 also stores, for example, data on program information (for example, EPG data received via broadcast wave), and OSD image data required for OSD display. Further, the memory 7 has a work region that functions as a work memory necessary for various control operations.

The television receiver 10 includes an analog tuning section 12, in addition to a digital tuning section 14. Therefore, the television receiver 10 can receive analog broadcasting. The television receiver 10 also includes an external input section 31, to which various external devices 30 such as a solid memory (for example, an HDD or an SD card) or a disc device (for example, a BD (Blu-ray Disc), a DVD, or a CD) can be connected. Further, the television receiver 10 has incorporated a recording/ reproducing section 32 for recording/ playing back a BD, a DVD or a CD. The receiver television 10 also includes an IP broadcasting tuning section 23. Therefore, the television receiver 10 can receive IP broadcasting.

The television receiver 10 further includes an AV switching section 13, a digital demodulating section 15, a separator section (DMUX) 16, a video decoding/ capturing section 17, a video selecting section 18, a vide processing section 19, an adding circuit 20, a display controlling section 21, the liquid crystal display section 22, an EPG/OSD/program setting section 24, an audio decoding section 25, an audio selecting section 26, an audio output converting section 27, a speaker 28, a tuning section 33, a communication controlling section 34, a remote control receiver 35, and an OPC (optical) sensor 38 for detecting environmental brightness.

The analog tuning section 12 tunes in an analog television broadcasting signal received by an antenna 11 for receiving analog broadcasting only. The analog tuning section 12 tunes in the analog television broadcasting signal according to a tuning instruction from the tuning section 33. The analog tuning section 12 supplies a reception signal to the AV switching section 13. The reception signal is divided into an audio signal and a video signal by the AV switching section 13. The video signal is supplied to the video selecting section 18, while the audio signal is supplied to the audio selecting section 26.

The digital tuning section 14 tunes in a digital television broadcasting signal received by a digital broadcasting receiving antenna 40. The digital tuning section 14 tunes in, according to a tuning instruction from the tuning section 33, a channel to be received. The digital tuning section 14 supplies a reception signal to the digital demodulating section 15. The reception signal is demodulated by the digital demodulating section 15, and then supplied to the separator section (DMUX) 16.

The IP broadcasting tuning section 23 tunes in IP broadcasting received by the communication controlling section 34 connected to, for example, a telephone line or a LAN. The IP broadcasting tuning section 23 tunes in, according to a tuning instruction from the tuning section 33, a specific IP broadcasting to be received, and then supplies an output to the separator section (DMUX) 16.

The separator section (DMUX) 16 separates multiplexed video data and audio data that are supplied from the digital demodulating section 15 or the IP broadcasting tuning section 23, and then supplies the video data and the audio data to the video decoding/ capturing section 17 and the audio decoding section 25, respectively. The separator section (DMUX) 16 extracts data such as EPG data included in a broadcasting signal, and then supplies the data to EPG/OSD/program setting section 24. Note that a broadcast wave signal extracted by the separator section (DMUX) 16 is stored in the memory 7 by a writing control executed by the CPU 6, if necessary.

The video decoding/capturing section 17 decodes the video data separated by the separator section (DMUX) 16, or captures, as a static image, video information included in the video data. The video signal decoded by the video decoding/capturing section 17 is supplied to the video selecting section 18.

As early described, the video selecting section 18 receives the video signal from the analog tuning section 12, and also receives a video signal from the external input section 31. The video selecting section 18 selects, in response to a control signal from the CPU 6, one of these video signals, and then supplies the video signal to the video processing section 19.

The video processing section 19 carries out various video processes with respect to the video signal supplied thereto. The present invention is characteristic in this video processing section 19. Therefore, the video processing section 19 is described later in detail. The video processing section 19 carries out, with respect to the video signal, a video process such as a noise reduction process, adjustment of sharpness, or adjustment of contrast, so as to convert video data such that the video data becomes a video signal optimal for the liquid crystal display device 22.

The display controlling section 21 includes a driving circuit for causing the liquid crystal display device 22 to display video data thus received. The display controlling section 21 supplies, to the liquid crystal display device 22, electric program guide (EPG) data or OSD (On Screen Display) data from EPG/OSD/program setting section 24, in addition to the video data from the video processing section 19, which EPG data or the OSD data is added by the adding circuit 20. The liquid crystal display device 22 displays, on its screen, the video data supplied thereto.

The audio decoding section 25 decodes the audio data separated by the separator section (DMUX) 16, and then supplies a decoded audio signal to the audio selecting section 26.

The audio selecting section 26 receives the audio signal from the AV switching section 13, the audio signal from the external input section 31, and the audio signal from the audio decoding section 25. The audio selecting section 26 selects, from these audio signals, an audio signal corresponding to the video signal selected, in response to the control signal from the CPU 6, by the video selecting section 18. The audio selecting section 26 then supplies the audio signal to the speaker 28 through the audio output converting section 27. The audio output converting section 27 converts, into a signal optimal for reproduction in the speaker 28, the audio signal supplied thereto, and then supplies the signal to the speaker 28.

The remote control receiver 35 receives an optical signal (a control signal) from a remote control 36. A viewer gives, by use of the remote control 36, an instruction such as shift to scaling display, selection and determination of various buttons during the scaling display (later described).

The EPG/OSD/program setting section 24 creates an electronic program guide on the basis of EPG data that is regularly updated and stored. The EPG/OSD/program setting section 24 also draws OSD data stored in advance in the memory 7. The OSD data is data on the basis of which various information, such as a setting menu screen, a volume cage, current time, and a selected channel, stored in advance in the memory 7 is drawn. The EPG/OSD/program setting section 24 also carries out, for example, a program setting process by use of the electronic program guide.

The communication controlling section 34 controls communication such that the communication is executed through a network such as a telephone line, a LAN, or the Internet.

The above description particularly exemplifies the television receiver. However, the present invention is not limited to this. It is apparent that gradation correction of the present invention is applicable to a mobile device, such as a mobile phone, a car navigation system or a portable video game machine, by use of which TV can be watched.

Subsequently, the video processing section 19 shown in Fig. 1 is described in detail, and a gradation correction mechanism that is a characteristic feature of the present invention is also described.

### [Video Processing Section (Gradation adjustment device)]

Fig. 2 illustrates a configuration of the video processing section 19 shown in Fig. 1. The video processing section 19 is a gradation adjustment device for correcting a gradation of an image to be displayed on the television receiver 10. The video processing section 19 has a correction mechanism of correcting brightnesses of adjacent two pixels, which brightnesses are included in an intermediate brightness region of brightness distribution, so as to reduce a first brightness difference between the adjacent two pixels, which first brightness difference is obtained in a case where predetermined quantity of gradation correction is carried out with respect to input image data, (1) the first brightness difference being greater than a second brightness difference between the adjacent two pixels, which second brightness difference is obtained in a case where the predetermined quantity of gradation correction is not carried out with respect to the input image data, and (2) the first brightness difference being not more than a predetermined threshold.

Specifically, as shown in Fig. 2, the video processing section 19 includes a gradation correcting section 2 (gradation correcting section), an intermediate brightness region determining section 3 (intermediate brightness region determining section), a brightness difference determining section 4a (brightness difference determining section), a brightness difference threshold determining section 4b (brightness difference threshold determining section), and a gradation adjusting section 5 (correction section).

The gradation correcting section 2 receives input image data 1 such as an input video signal, detects gradation correction quantity (gain) of brightness on the basis of a value of the input video signal, and carries out gradation correction on the basis of the gradation correction quantity thus detected.

The intermediate brightness region determining section 3 receives gradation-corrected image data from the gradation correcting section 2, and determines whether or not brightnesses of adjacent two pixels are included in the intermediate brightness region of brightness distribution. What is meant by the brightness included in the intermediate brightness region of brightness distribution in Example is a brightness having an input gradation which falls within a range from 100 gradations to 130 gradations. In a case where the input gradation is converted into an output gradation of a gamma shown in Fig. 3, the brightness has an output gradation which falls with a range from 100 gradations to 169 gradations. What is meant by the adjacent two pixels is two pixels aligned along a scanning line, or two pixels aligned perpendicularly to the scanning line. In a case where the intermediate brightness region determining section 3 determines that the brightnesses of the adjacent two pixels are included in the intermediate brightness region of brightness distribution, the intermediate brightness region determining section 3 supplies, to the brightness difference determining section 4a, a determination result, and the gradation-corrected image data supplied from the gradation correcting section 2.

The brightness difference determining section 4a is configured to receive the input image data 1, and the gradation-corrected image data. The brightness difference determining section 4a calculates a brightness difference between adjacent two pixels to which the input image data 1 is input (that is, the input image data 1 which is not subjected to gradation correction), and a brightness difference between adjacent two pixels to which the gradation-corrected image data is input (that is, the gradation-corrected image data which is subjected to gradation correction). The brightness difference determining section 4a determines whether or not the brightness difference between adjacent two pixels to which the gradation-corrected image data is input is greater than the brightness difference between adjacent two pixels to which the input image data 1 is input. In a case where the brightness difference determining section 4a determines that the brightness difference between adjacent two pixels to which the gradation-corrected image data is input is greater than the brightness difference between adjacent two pixels to which the input image data 1 is input, the brightness difference determining section 4a supplies, to the brightness difference threshold determining section 4b, a difference value between (i) the brightness difference between adjacent two pixels to which the gradation-corrected image data is input and (ii) the brightness difference between adjacent two pixels to which the gradation-corrected image data is input.

In a case where the brightness difference threshold determining section 4b receives the difference value from the brightness difference determining section 4a, the brightness difference threshold determining section 4b determines whether or not the difference value is not more than a predetermined threshold. Note that, as shown in Fig. 6, the predetermined threshold is a value determined in accordance with quantity (gain) by which a gradation of a brightness is corrected in accordance to the value of the input video signal. In a case where the brightness difference threshold determining section 4b determines that the difference value is not more than the predetermined threshold, the brightness difference threshold determining section 4b supplies a signal to the gradation adjusting section 5.

In a case where the gradation adjusting section 5 receives the signal from the brightness difference threshold determining section 4b, the gradation adjusting section 5 obtains the gradation-corrected image data created by the gradation correcting section 2.

The following description will discuss a method for correcting a gradation in a general image displaying device, with reference to Figs. 3 and 4. The general image displaying device analyzes an image, and carries out drawing, with respect to a gamma curve shown in an upper side of Fig. 3, such as lifting up of a high gradation part of the gamma curve, or lifting down of a low gradation part of the gamma curve (see a lower side of Fig. 3). In this case, an originally smooth gradation part shown in an upper side of Fig. 4 is lifted up. This generates a step in the originally smooth gradation part, as shown in a lower side of Fig. 4, whereby a part which looks like a pseudo contour appears. That is, the gradation-corrected image data created by the gradation correcting section 2 has a gradation shown in the lower side of Fig. 4.

In order to prevent the pseudo contour, the intermediate brightness region determining section 3, the brightness difference determining section 4a, the brightness difference threshold determining section 4b, and the gradation adjusting section 5 of the present embodiment determine a threshold of a brightness difference between adjacent pixels, recognize, as gradual change in brightness, pixels having a threshold not more than a given threshold, and blurs the pixels thus recognized as gradual change in brightness, thereby smoothing steps shown in an upper side of Fig. 5 (the steps are identical to those shown in the lower side of Fig. 4) to reduce a gradation step as shown in a lower side of Fig. 5.

The gradation adjusting section 5 blurs the pixels that are recognized as gradual change in brightness. Specifically, it is possible to easily blur the pixels by use of a blur filter, as shown in the following Example. The adding circuit 20 receives, as output image data, image data processed by the gradation adjusting section 5.

Note that pixels having a threshold not less than the given threshold are not recognized as gradual change in brightness, and therefore an entire video is not blurred.

According to the present embodiment, it is possible to specify a gradation whose gradation step should be reduced, by determining a threshold in accordance with lifting up quantity of a gamma, as shown in Fig. 6.

Such a method makes it possible to reproduce, as smooth gradual change in brightness, an intermediate gradation part where a pseudo contour is likely to occur.

According to the present embodiment, the intermediate brightness region determining section 3 determines after the gradation correcting section 2 corrects a gradation, as shown in Fig. 2. However, the present invention is not limited to this configuration. For example, the intermediate brightness region determining section 3 can determine before the gradation correcting section 2 corrects a gradation. Alternatively, the intermediate brightness region determining section 3 can determine after the brightness difference threshold determining section 4b determines, or the intermediate brightness region determining section 3 can determine simultaneously with a process carried out by another section. That is, processes carried out by sections are not limited to a configuration shown in Fig. 2 provided that in a case where the gradation adjusting section 5 carries out a process, it is possible to determine whether or not (i) each of adjacent two pixels has a brightness that is included in the intermediate brightness region of brightness distribution, (ii) a first brightness difference between the adjacent two pixels, which first brightness difference is obtained in a case where predetermined quantity of gradation correction is carried out with respect to input image data, is greater than a second brightness difference between the adjacent two pixels, which second brightness difference is obtained in a case where the predetermined quantity of gradation correction is not carried out with respect to the input image data, and (iii) the first brightness difference is not more than a predetermined threshold.

### [Example]

In a case where lifting up quantity (gain) of a high gradation part of an input signal is determined on the basis of a graph, and a gamma is changed for drawing by the lifting up quantity, linear rise in gain from 100 gradations up to 140 gradations, shown in Fig. 7(1), illustrates a gamma curve shown in Fig. 7(2).

The following describes with reference to a 4×4 pixel group shown in Fig. 8. Numeric values shown in Fig. 8 indicate input brightness values that are input to the pixel group, respectively. In a case where gain is applied, on the basis of a gain table of Fig. 7(1), to pixels having such input brightness values, the pixels indicate input brightness values shown in the right-hand of Fig. 8. Among these, in a part of Fig. 8(2), which part is surrounded by a thick line, brightness differences between any adjacent pixels to which the gain has been applied are increased, as shown in Fig. 9, more than those to which the gain has not been applied. Such increased differences generate a gradation step, whereby a pseudo contour possibly appears on a display.

In order to prevent the pseudo contour, an input gradation threshold and a difference threshold are determined as shown in Fig. 10, and a gradation to be corrected, which was originally smooth, is corrected. Note that a maximum value (limit) can be determined aside from the difference threshold, so that a gradation can be corrected even in a case where a threshold of an upper limit of a gradation is not determined.

Actually, in a case where the pixels which have the input values shown in Fig. 8 and are surrounded by the thick line are corrected, a difference threshold and an input gradation threshold are firstly determined as below as conditions to be corrected.

### <Conditions>

Difference threshold: not more than 8
Input gradation threshold: 100 gradations through 130 gradations
Subsequently, lifting up quantity (gain) of a gradation, which is determined from Fig. 7(1), is applied to the pixels. This converts the input gradation threshold into an output gradation threshold. On the basis of the output gradation threshold (100 gradations through 169 gradations) thus obtained, a flag is attached to a pixel to be corrected, and a pixel not to be corrected (see Fig. 11). For example, a flag "1" is attached to the pixel to be corrected, and a flag "0" is attached to the pixel not to be attached.

The pixel to be corrected is clarified as shown in Fig. 11, and then a gradation of the pixel to be corrected is smoothed by use of a blur filter 5a (see Fig. 12).

Note that the blur filter 5a is not used for a pixel, in Fig. 11, to which a flag "0" is attached. In Fig. 12, the blur filter 5a is a filter for three pixels that horizontally align. Alternatively, the blur filter 5a can be a filter for three pixels that vertically align, or a filter for 3×3 pixels. Further, in Fig. 12, a process is carried out horizontally with respect to every pixel, as shown in Figs. 12(1) and 12(2). In a case, however, where a flag "0" is attached to a target itself, it is unnecessary to use the blur filter 5a itself.

Such processes allow adjacent pixels having a gradation step of 7 (a gradation difference of 7) shown in the left-hand of Fig. 9 to be the adjacent pixels having a gradation step of 5 shown in Fig. 12(2), thereby reducing the gradation step.

In a case where (i) a pixel having a brightness value of 15 is located at the right-hand of a pixel in a pixel group shown in the right-hand of Fig. 9, which pixel has a brightness value of 156, and (ii) three pixels of the pixel group have a smooth gradation, it is possible to smooth a gradation part having a difference by using the blur filter 5a as shown in Fig. 13.

### [Effect of the present embodiment]

A television receiver (an image displaying device) of the present embodiment includes a correction mechanism for correcting brightnesses of adjacent two pixels, which brightnesses are included in an intermediate brightness region of brightness distribution, so as to reduce a first brightness difference between the adjacent two pixels, which first brightness difference is obtained in a case where predetermined quantity of gradation correction is carried out with respect to input image data, (1) the first brightness difference being greater than a second brightness difference between the adjacent two pixels, which second brightness difference is obtained in a case where the predetermined quantity of gradation correction is not carried out with respect to the input image data, and (2) the first brightness difference being not more than a predetermined threshold. This makes it possible to reduce a gradation step generated by lifting up or down of an originally smooth gradation part, which lifting up or down is caused by execution of the predetermined quantity (gain) of gradation correction (correction of a gamma curve having a gamma property). That is, this makes it possible to smooth the gradation step. It is therefore possible to provide an image displaying device that can (i) solve a problem that a pseudo contour appears in an intermediate gradation part such as a skin color and (ii) display an image having an excellent quality of an original image.

### [Program and Storage Medium]

Finally, the video processing section 19 included in the television receiver 10 can be realized by hardware or can be realized by software with the use of a CPU (Central Processing Unit) as follows:
That is, the television receiver 10 includes a CPU, a ROM (read only memory), a RAM (random access memory), and a memory device (storage medium) such as a memory. The CPU executes instructions in a program for realizing each function. The ROM contains the program. The RAM develops the program in an executable form. The memory device stores the program and various data. Therefore, the objective of the present invention can also be achieved by a designated storage medium.

The storage medium can be a computer-readable storage medium storing program codes (executable program, intermediate code program, or source program) for the television receiver 10 serving as software for realizing the foregoing respective functions. Such a storage medium is provided in the television receiver 10. The television receiver 10 (or CPU or MPU) serving as a computer retrieves and executes the program codes stored in the storage medium.

The storage medium that supplies the program codes to the television receiver 10 is not limited to a storage medium having a specific configuration, or specific types of storage medium. That is, the storage medium can be, for example, a tape, such as a magnetic tape or a cassette tape; a disk including (i) a magnetic disk such as a floppy (Registered Trademark) disk or a hard disk and (ii) an optical disk such as CD-ROM, MO, MD, DVD, or CD-R; a card such as an IC card (memory card) or an optical card; or a semiconductor memory such as a mask ROM, EPROM, EEPROM, or flash ROM. Alternatively, the objective of the present invention can also be achieved by the television receiver 10 that is arranged to be connectable to a communications network. In this case, the program codes are delivered to the television receiver 10 over the communications network. The communications network is not limited to specific types or shapes of communications network provided that the program codes are delivered to the television receiver 10 over the communications network. Therefore, the communications network can be, for example, the Internet, an intranet, extranet, LAN, ISDN, VAN, CATV communications network, virtual dedicated network (virtual private network), telephone line network, mobile communications network, or satellite communications network.

A transfer medium which constitutes the communications network is not limited to a transfer medium having a specific configuration, or specific types of transfer medium provided that the transfer medium can transfer the program codes. Therefore, the transfer medium can be, for example, wired line such as IEEE 1394, USB (Universal Serial Bus), electric power line, cable TV line, telephone line, or ADSL (Asymmetric Digital Subscriber Line) line; or wireless such as infrared radiation (IrDA, remote control), Bluetooth (Registered Trademark), 802.11 wireless, HDR, mobile telephone network, satellite line, or terrestrial digital network. The present invention encompasses a carrier wave, in which computer data signal which is embodied by electronic transmission of the program codes, is embedded.

In order to attain the object, a gradation adjustment device of the present invention is a gradation adjustment device, for correcting a gradation of an image to be displayed by an image displaying device, the gradation adjustment device, including a correction mechanism for correcting brightnesses of adjacent two pixels, which brightnesses are included in an intermediate brightness region of brightness distribution, so as to reduce a first brightness difference between the adjacent two pixels, which first brightness difference is obtained in a case where predetermined quantity of gradation correction is carried out with respect to input image data, (1) the first brightness difference being greater than a second brightness difference between the adjacent two pixels, which second brightness difference is obtained in a case where the predetermined quantity of gradation correction is not carried out with respect to the input image data, and (2) the first brightness difference being not more than a predetermined threshold.

According to the configuration, the gradation adjustment device of the present invention can reduce a gradation step generated by lifting up or down of an originally smooth gradation part, which lifting up or down is caused by execution of the predetermined quantity (gain) of gradation correction (correction of a gamma curve having a gamma property). That is, according to the configuration, the gradation adjustment device of the present invention can smooth the gradation step.

This makes it possible to provide an image displaying device that can (i) solve the problem that a pseudo contour appears in an intermediate gradation part such as a skin color and (ii) display an image having an excellent quality of an original image.

In order to attain the object, a gradation adjustment device of the present invention is a gradation adjustment device, for correcting a gradation of an image to be displayed by an image displaying device, the gradation adjustment device, including: a gradation correcting section for carrying out predetermined quantity of gradation correction with respect to input image data; an intermediate brightness region determining section for determining whether or not brightnesses of adjacent two pixels are included in an intermediate brightness region of brightness distribution; a brightness difference determining section for determining whether or not a brightness difference between the adjacent two pixels that are determined, by the intermediate brightness region determining section, to have the brightnesses that are included in the intermediate brightness region becomes greater after the predetermined quantity of gradation correction is carried out than before the predetermined quantity of gradation correction is carried out; a brightness difference threshold determining section for determining whether or not the brightness difference determined, by the brightness difference determining section, to become greater is not more than a predetermined threshold; and a correction section for correcting the brightnesses of the adjacent two pixels whose brightness difference is determined, by the brightness difference threshold determining section, to be not more than the predetermined threshold, the correction section correcting the brightnesses of the adjacent two pixels, so that the brightness difference is reduced.

According to the configuration, the gradation adjustment device of the present invention can reduce a gradation step generated by lifting up or down of an originally smooth gradation part, which lifting up or down is caused by correction of a gamma curve having a gamma property. That is, according to the configuration, the gradation adjustment device of the present invention can smooth the gradation step.

This makes it possible to provide an image displaying device that can (i) solve the problem that a pseudo contour appears in an intermediate gradation part such as a skin color and (ii) display an image having an excellent quality of an original image.

It is preferable that the gradation adjustment device of the present invention be configured to perform the correction of the brightnesses of the adjacent two pixels by use of a blur filter so as to reduce the brightness difference between the adjacent two pixels.

According to the configuration, the gradation adjustment device of the present invention can easily smooth a gradation step caused by execution of the predetermined quantity (gain) of gradation correction (correction of a gamma curve having a gamma property).

In order to attain the object, a gradation adjusting method of the present invention is a gradation adjusting method for correcting a gradation of an image to be displayed by an image displaying device, the method including: performing correction in which brightnesses of adjacent two pixels, which brightnesses are included in an intermediate brightness region of brightness distribution, being corrected, so that a first brightness difference between the adjacent two pixels is reduced, which first brightness difference is obtained in a case where predetermined quantity of gradation correction is carried out with respect to input image data, (1) the first brightness difference being greater than a second brightness difference between the adjacent two pixels, which second brightness difference is obtained in a case where the predetermined quantity of gradation correction is not carried out with respect to the input image data, and (2) the first brightness difference being not more than a predetermined threshold.

According to the configuration, the gradation adjusting method of the present invention can reduce a gradation step generated by lifting up or down of an originally smooth gradation part, which lifting up or down is caused by execution of the predetermined quantity (gain) of gradation correction (correction of a gamma curve having a gamma property). That is, according to the configuration, the gradation adjustment device of the present invention can smooth the gradation step.

Therefore, application of the gradation adjusting method of the present invention to the image displaying device makes it possible to provide an image displaying device that can (i) solve the problem that a pseudo contour appears in an intermediate gradation part such as a skin color and (ii) display an image having an excellent quality of an original image.

The present invention encompasses an image displaying device or a television receiver that includes the above-configured gradation adjustment device.

It is possible to provide an image displaying device or a television receiver that can display an image having an excellent quality of an original image, by providing the gradation adjustment device in the image displaying device or the television receiver.

In order to attain the object, the present invention is a program for causing a computer to function as the sections of the display device, and a computer-readable storage medium in which the program is stored.

This makes it possible to provide a program including an interface having an improved operationality, and a storage medium in which the program is stored.

The present invention is not limited to the description of the embodiments above, and can therefore be modified by a skilled person in the art within the scope of the claims. Namely, an embodiment derived from a proper combination of technical means disclosed in different embodiments is encompassed in the technical scope of the present invention. That is, the embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention is applicable to a local heating device for drying, by heat, liquid or a thermosetting member that is locally provided on a substrate, so as to form a film.

### Reference Signs List

- 1:: input image data
- 2:: gradation correcting section
- 3:: intermediate brightness region determining section
- 4a:: brightness difference determining section
- 4b:: brightness difference threshold determining section
- 5:: gradation adjusting section
- 5a:: blur filter
- 6:: CPU
- 7:: memory
- 8:: bus
- 10:: television receiver (image displaying device)
- 11:: antenna
- 12:: analog tuning section
- 13:: AV switching section
- 14:: digital tuning section
- 15:: digital demodulating section
- 16:: separator section
- 17:: video decoding/ capturing section
- 18:: video selecting section
- 19:: video processing section (gradation adjustment device)
- 20:: adding circuit
- 21:: display controlling section
- 22:: liquid crystal display device
- 23:: IP broadcasting tuning section
- 24:: EPG/OSD/program setting section
- 25:: audio decoding section
- 26:: audio selecting section
- 27:: audio output converting section
- 28:: speaker
- 30:: external device
- 31:: external input section
- 32:: recording/reproducing section
- 33:: tuning section
- 34:: communication controlling section
- 35:: remote control receiver
- 36:: remote control
- 36:: remote control
- 38:: OPC sensor
- 40:: digital broadcasting receiving antenna

## Claims

1. A gradation adjustment device, for correcting a gradation of an image to be displayed by an image displaying device,
the gradation adjustment device, comprising a correction mechanism for correcting brightnesses of adjacent two pixels, which brightnesses are included in an intermediate brightness region of brightness distribution, so as to reduce a first brightness difference between the adjacent two pixels, which first brightness difference is obtained in a case where predetermined quantity of gradation correction is carried out with respect to input image data,
(1) the first brightness difference being greater than a second brightness difference between the adjacent two pixels, which second brightness difference is obtained in a case where the predetermined quantity of gradation correction is not carried out with respect to the input image data, and
(2) the first brightness difference being not more than a predetermined threshold.

2. A gradation adjustment device, for correcting a gradation of an image to be displayed by an image displaying device,
the gradation adjustment device, comprising:
a gradation correcting section for carrying out predetermined quantity of gradation correction with respect to input image data;
an intermediate brightness region determining section for determining whether or not brightnesses of adjacent two pixels are included in an intermediate brightness region of brightness distribution;
a brightness difference determining section for determining whether or not a brightness difference between the adjacent two pixels that are determined, by the intermediate brightness region determining section, to have the brightnesses that are included in the intermediate brightness region becomes greater after the predetermined quantity of gradation correction is carried out than before the predetermined quantity of gradation correction is carried out;
a brightness difference threshold determining section for determining whether or not the brightness difference determined, by the brightness difference determining section, to become greater is not more than a predetermined threshold; and
a correction section for correcting the brightnesses of the adjacent two pixels whose brightness difference is determined, by the brightness difference threshold determining section, to be not more than the predetermined threshold, the correction section correcting the brightnesses of the adjacent two pixels, so that the brightness difference is reduced.

3. The gradation adjustment device as set forth in claim 1 or 2, being configured to perform the correction of the brightnesses of the adjacent two pixels by use of a blur filter so as to reduce the brightness difference between the adjacent two pixels.

4. A gradation adjusting method for correcting a gradation of an image to be displayed by an image displaying device, the method comprising:
performing correction in which brightnesses of adjacent two pixels, which brightnesses are included in an intermediate brightness region of brightness distribution, is corrected, so that a first brightness difference between the adjacent two pixels is reduced, which first brightness difference is obtained in a case where predetermined quantity of gradation correction is carried out with respect to input image data,
(1) the first brightness difference being greater than a second brightness difference between the adjacent two pixels, which second brightness difference is obtained in a case where the predetermined quantity of gradation correction is not carried out with respect to the input image data, and
(2) the first brightness difference being not more than a predetermined threshold.

5. An image displaying device, comprising a gradation adjustment device recited in any one of claims 1 through 3.

6. A television receiver, comprising a gradation adjusting device recited in any one of claims 1 through 3.

7. A program, for causing a computer to function as the sections of a gradation adjustment device recited in claim 2.

8. A computer-readable storage medium, in which a program recited in claim 7 is stored.
